# EUROPEAN PATENT APPLICATION

(11) **EP 2 381 093 A1**
(43) Date of publication of application: **26.10.2011**
(21) Application number: 10731080.7
(22) Date of filing: 15.01.2010
(51) Int. Cl.: F03D 1/06

(54) **WIND TURBINE BLADE**

(30) Priority: 19.01.2009 ES 200900127
(71) Applicant: Torres Martinez, Manuel, 31007 Pamplona (Navarra) (ES)
(72) Inventor: Torres Martinez, Manuel, 31007 Pamplona (Navarra) (ES)
(74) Representative: Cabinet Plasseraud
(86) International application number: PCT/ES2010/000008
(87) International publication number: WO 2010/081921

(57) **Abstract**

The invention relates to a wind turbine blade formed by outer lateral skins (1) arranged on stringers (2) in the manner of inner longitudinal partitions, the blade root being determined by a cylindrical section (5) which is formed by means of extensions (4) of the outer lateral skins (1) and the stringers (2) forming the structural assembly of the blade body, said blade body being able to be determined by means of longitudinal sections which are attached to anchoring rods through longitudinal holes of the walls of the sections in coinciding portions of the attachment.

## Description

### Field of the Art

The present invention relates to wind turbine blades which are formed by the attachment of a set of independently manufactured longitudinal parts, determining structural features of the assembly for forming the blade which provide an advantageous implementation in the part of the root intended to secure the blade on the rotating hub in the corresponding wind turbine; likewise contemplating a particular system for the attachment between longitudinal sections of composition of the blade.

### State of the Art

The worldwide demand for renewable energies, to deal with climate change and to maintain an expectation of energy production with less dependence on depletable natural resources, involves in a highly relevant manner wind energy, which is mostly developed by means of wind turbines which are driven by a rotor with blades which captures the action of the wind.

The development of wind turbines and their application to electricity production requires, however, wind turbines with an increasingly higher rated power and lower cost per Kilowatt of the energy which is produced.

To that end, the sweep surface of the blades of the rotor receiving the action of the wind, among other aspects, is essential in said wind turbines, such that one of the factors for maintaining the energy generation power is the increase in the size of the blades capturing the action of the wind.

Exceeding a measurement of the size of the blades of the wind turbines entails, however, a series of associated problems due to the difficulties which arise for the construction and the assembly in the installation, as well as for the transport.

Indeed, the wind turbine blades of a great length (greater than 35 meters) have a weight which greatly hinders the handling and which furthermore conditions the need for a very resistant anchoring in the installation, also having difficulties for the transport, since special means are required which are very expensive.

In relation to the installation securing, various anchoring solutions have been developed, as well as structural implementations for determining in the blade root a resistance which allows safely withstanding all the stresses which that area must withstand in the functional action of the blade. However, the solutions developed in this sense detrimentally condition the constructive formation and the cost of the blade to achieve satisfactory results of resistance in the installation.

In addition, to solve the problems inherent to the longitudinal dimension, the constructive implementation of the blades by means of longitudinal sections is known, which sections can be independently transported for their attachment in the site of installation of the wind turbine and even in the constructive assembly thereof.

This involves an advantage for blades of a great length (between 40 and 60 meters) which are already demanded by the wind energy sector, but also for more traditional blades (of between 30 and 40 meters), because since the blades can be made in sections of between 15 and 20 meters in length, they can be transported by normal means, a reduction of the transport cost being achieved which is advantageously greater than the cost of forming the independent sections and attaching them in the constructive assembly of the blades.

In this sense, various systems have been developed for attaching the component sections of the blades which are formed by the attachment of longitudinal sections, such as the solution of Patent ES 9901177, but the solutions known in such sense generally have deficiencies relating to the assembling difficulty and to the anchoring efficiency in the attachment of the sections.

### Object of the Invention

According to the invention, a wind turbine blade is proposed, with a structural implementation which advantageously determines a resistant root for securing the blade in its assembly of application and which can furthermore be formed by means of longitudinal sections, with also advantageous features of the attachment between the sections.

This blade object of the invention essentially consists of outer lateral skins laminated with layers of synthetic fibers, by means of which the aerodynamic profile of the blade is determined, arranged on a resistant inner structure formed by stringers in the manner of longitudinal partitions, the trailing edge of the aerodynamic profile being able to be determined by means of an attachment between the outer skins themselves, whereas the leading edge is formed by means of a complementary part also laminated with synthetic fibers.

According to the invention, the outer lateral skins of the aerodynamic profile and the stringers of the inner structure are extended at the end of the base of the blade, determining between the extensions of said parts a section of cylindrical composition which forms the blade root for the securing in the assembly of application.

The blade root is thus formed by the actual assembly of the constructive formation of the blade, therefore being a simple construction since it is not necessary to incorporate any accessory part for determining the blade root and, furthermore, since the root is formed by the actual structural parts of the constructive composition of the blade body, without accessory parts, attachments which can cause the weakening of the structural resistance of the blade are prevented.

In addition, the blade can be formed by means of longitudinal sections, a ring being arranged in the attachment of the component sections, which ring determines at its front portions channels in which there are fitted with their end edge the stringers of the inner structure of the sections, as well as the edges of the outer skins, which in the area comprised between the inner stringers are formed with a inwardly thickened portion, inside which, as well as over the stringers themselves, there are defined longitudinal holes opening out into respective cavities of the corresponding walls, the anchoring of the attachment being performed by means of rods which are inserted through said longitudinal holes, passing through the intermediate ring of the attachment, which rods are attached in a threaded coupling with respect to end elements between which a tightening tension is established.

In the sections which are attached, the cavities into which the longitudinal holes open out are made perpendicularly from the inner portion of the corresponding walls, without passing to the outer portion, said cavities having a cylindrical shape in one of the sections which are attached, in order to fit a cylindrical element therein, with respect to which the respective anchoring rod is coupled by screwing, whereas in the other section the cavities are oblong, a nut being incorporated therein on the end of the anchoring rod, to perform through the opening of the oblong cavity the action of the actuation on said nut.

An anchoring between the component sections of the blades is thus obtained which allows establishing a resistant attachment, with precision in the tightening by means of the actuation of the nuts which are arranged on the anchoring rods, it being very easy to assemble the attachment since the anchoring rods are incorporated before the coupling in one of the sections to be attached, such that it is then only necessary to couple the second section and tighten the nuts on the anchoring rods.

The incorporation of the intermediate ring of the attachment furthermore determines a protection preventing the defibration of the layers of fibers in the attachment edge of the outer skins of the blade sections which are attached, which prevents the force of the wind from causing a progressive defibration deterioration of the skins forming the aerodynamic profile in the work of application of the blade.

In addition, all the cavities for housing the anchoring elements of the attachment between the blade sections are located at the inner portion of the structural walls of the sections, whereby said walls of the sections are not very weakened, and the outer surface thereof remains continuous, such that the efficiency of the aerodynamic profile for the performance of the blade is not affected.

### Description of the Drawings

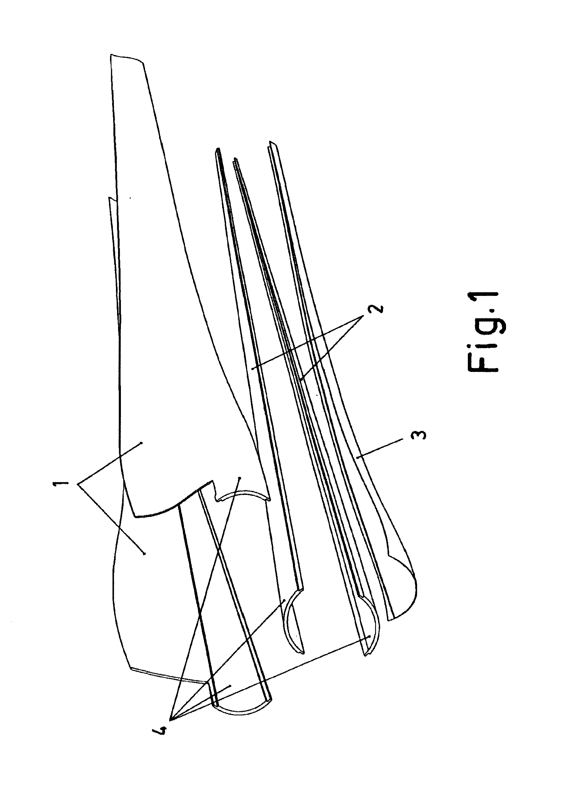

Figure 1 shows an exploded perspective view of the structural assembly of a wind turbine blade according to the object of the invention.

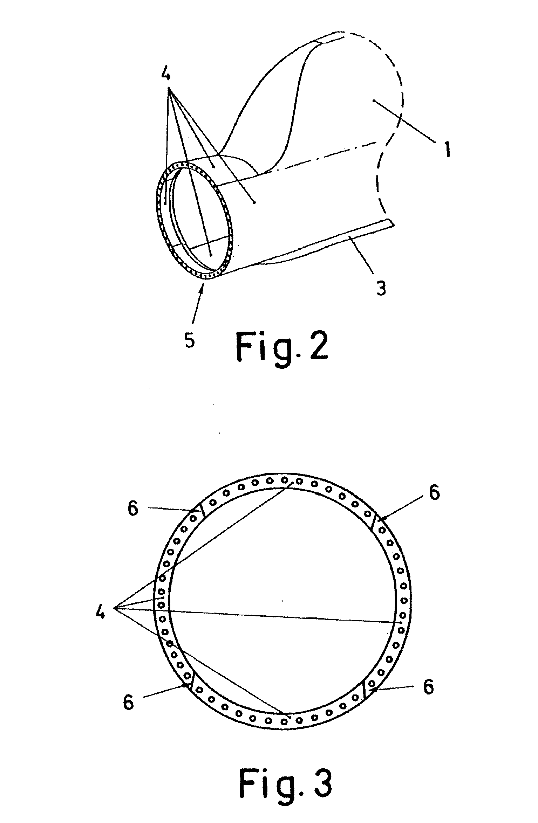

Figure 2 is a perspective view of an enlarged detail of the end corresponding to the blade root of the previous figure. Figure 3 is a frontal view of the previous blade root.
Figures 4, 5 and 6 show non-limiting examples of structural embodiments of wind turbine blades, with which the invention can be applied.
Figure 7 is a perspective view of an example of a wind turbine blade according to the invention, made in a single longitudinal section.
Figure 8 is a perspective view of an example of a wind turbine blade according to the invention, made with two longitudinal sections.

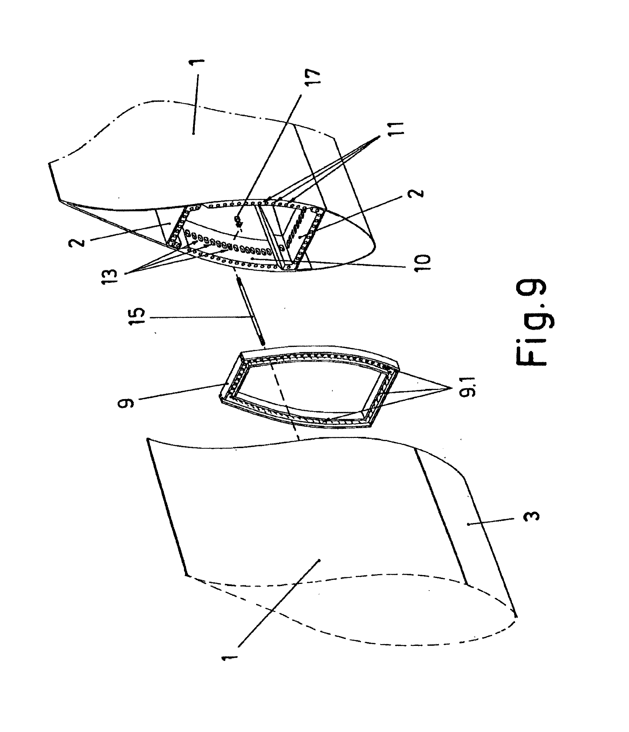

Figure 9 is an exploded perspective view of the attachment of the component sections of the previous figure.

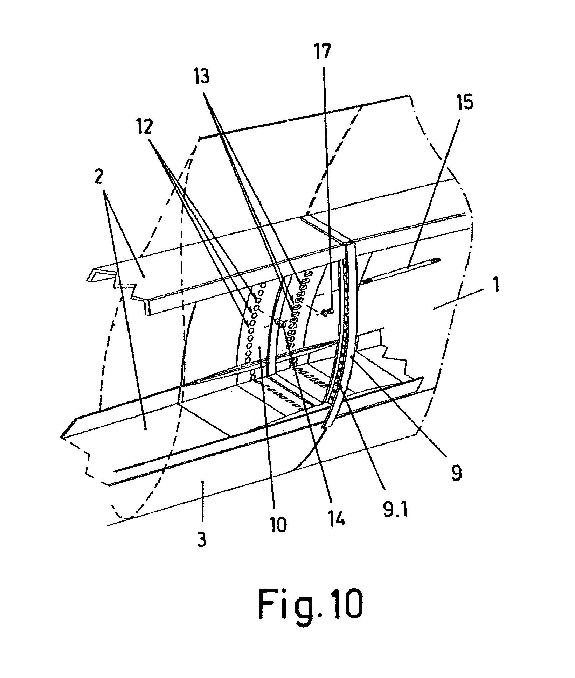

Figure 10 is a perspective view of the area of the attachment of the component sections of the blade, with the outer skins being transparent to observe the elements of the inside.
Figure 11 is an enlarged sectioned detail of the arrangement of an anchoring rod in the attachment between the component sections of the blade.

### Detailed Description of the Invention

The object of the invention relates to a wind turbine blade, in which features improving the constructive formation of the blade and its functionality have been determined.

The proposed blade is of the type comprising two outer lateral skins (1), arranged on an inner structure formed by stringers (2) in the manner of longitudinal partitions, such that the outer lateral skins (1) determine the aerodynamic profile of the blade, together with a complementary part (3) defining the leading edge, whereas in the opposite portion the mentioned outer lateral skins (1) are attached to one another determining the trailing edge.

According to the invention, both the outer lateral skins (1) and the stringers (2) of the inner structure determine, at the end corresponding to the base of the blade, extensions (4) by means of which there is formed a cylindrical section (5) forming the blade root for the securing in the assembly on the rotating rotor of the wind turbine of application.

The blade root is thus formed by the constructive assembly itself of the blade, by means of the outer lateral skins (1) and the stringers (2) of the inner structure which make up the structural formation of the blade body, without need to subsequently couple accessory parts for forming the root.

The attachment between the extensions (4) forming the cylindrical section (5) which forms the root is determined by the bonding of the corresponding edges, it being provided for such purpose that the edges (6) of said extensions (4) are defined in a bevel or in a stepped cut so that the bonding surface is greater and the attachment is therefore stronger.

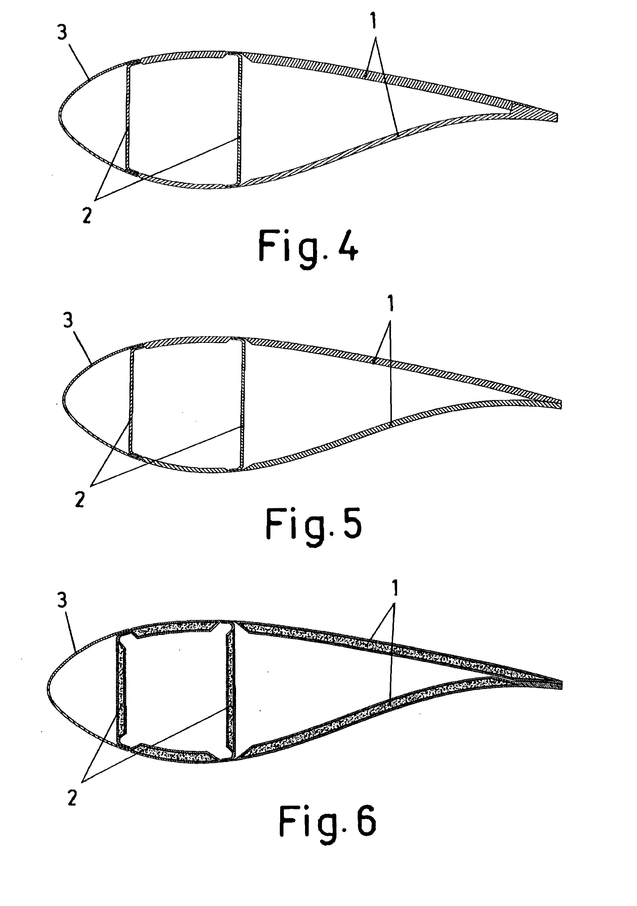

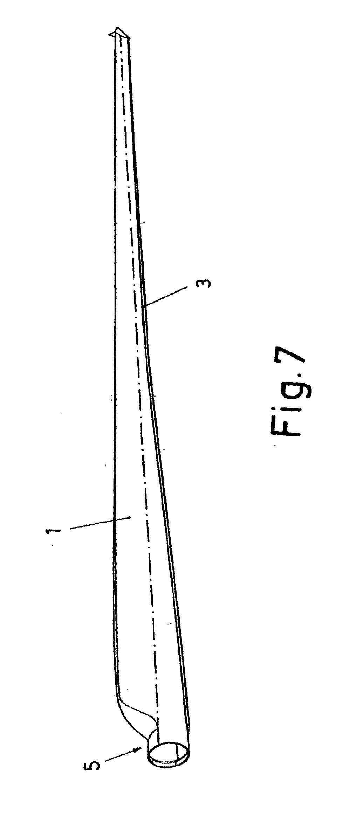

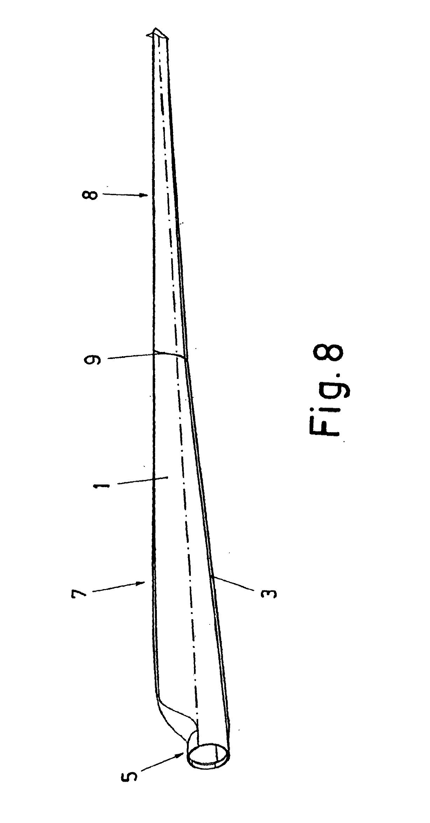

Said formation of the blade is applicable regardless of the structural shapes of the outer lateral skins (1) and of the stringers (2) of the inner structure, which can have various configurations as observed in Figures 4, 5 and 6, in which embodiments which are not limiting have been depicted only as examples; whereas longitudinally the blade can be in a single section such as the example of Figure 7, or be formed with two or more longitudinal sections (7, 8) such as the example of Figure 8, for the component sections (7, 8) to be attached in the constructive assembly of the wind turbine in which the blade is applied.

For the attachment of the sections (7, 8) of longitudinal composition of the blade, an intermediate ring (9) is incorporated in the coupling of the attachment as observed in Figures 6 to 8, said intermediate ring (9) determining, on its front faces, channels (9.1) in which the outer lateral skins (1) and the stringers (2) of the inner structure of the sections (7, 8) which are attached are fitted with their end edge, thus preventing the defibration of the outer lateral skins (1) from the edge of the attachment, due to the action of the wind during the function of the work of application of the blade.

In the end portion corresponding to the attachment, the outer lateral skins (1) of the sections (7, 8) are formed in the area comprised between the stringers (2) of the inside, with an inwardly thickened portion (10), there being defined in said thickened portion, as well as in the stringers (2), longitudinal holes (11) which are opposite one another in the sections (7, 8) which are attached, as well as in relation to corresponding through holes which the intermediate ring (9) has between its front channels (9.1).

The longitudinal holes (11) of the sections (7, 8) open out into respective cavities (12 and 13) made perpendicularly over the inner portion of the walls of said sections (7, 8), such that in one of the sections, for example the section (7), the cavities (12) into which the respective longitudinal holes (11) open out are cylindrical, cylindrical elements (14) being fitted therein, which cylindrical elements are provided with a threaded transverse hole (14.1) for the threaded coupling of the end of a rod (15) which is inserted through the respective longitudinal hole (11).

In the other section of the blade, in this case the section (8), the cavities (13) into which the respective longitudinal holes (11) open out are oblong, there being housed in each of these cavities (13) a stop washer (16) and a nut (17) which is incorporated on the other end of the rod (15) passing through the respective longitudinal hole (11), such that said nut (17) can be actuated through the opening of the oblong cavity (13) to establish therewith tightening for tensioning the rod (15).

In such conditions, to establish the anchoring of attachment between the sections (7, 8), the cylindrical elements (14) are first inserted in the cavities (12) of the section (7) and respective rods (15) are introduced through the corresponding longitudinal holes (11), which rods are coupled by screwing on the mentioned cylindrical elements (14), whereby said rods (15) are fixed with respect to the section (7), projecting at the front thereof through the longitudinal holes (11).

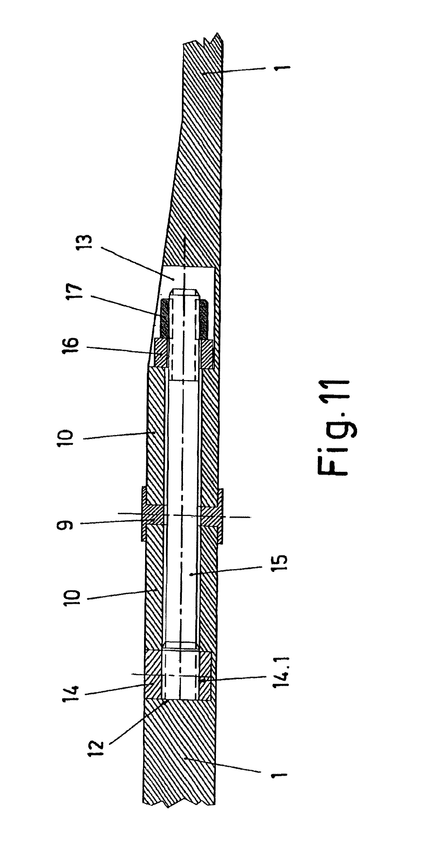

Once this is done, the intermediate ring (9) is placed, making the rods (15) passing through the holes thereof until said intermediate ring (9) abuts against the section (7), and in this arrangement, in order to establish the attachment of the section (8), the insertion of both sections (7, 8) in relation to one another is carried out, making the rods (15) be introduced in the longitudinal holes (11) of the section (8), up to the oblong cavities (13) thereof, wherein the washers (16) and the corresponding nuts (17) are incorporated on the end of the rods (15), such that by tightening the nuts (17) a tension of the rods (15) is obtained which assures the attachment between the sections (7, 8), as observed in Figure 11.

The cavities (12 and 13) do not pass to the outside of the outer lateral skins (1) of the sections (7, 8), such that the aerodynamic profile of the blade is not affected by the anchoring of the attachment; the actuation on the nuts (17) being able to be performed from the inside of the blade in order to perform the assembly for the formation thereof.

## Claims

1. A wind turbine blade of the type comprising a structural formation formed by outer lateral skins (1) arranged on an inner structure formed by stringers (2) in the manner of longitudinal partitions, the length of the blade being able to be determined by means of the attachment of consecutive sections (7, 8), **characterized in that** at the end corresponding to the base of the blade the outer lateral skins (1) and the stringers (2) of the inner structure determine extensions (4), by means of which a cylindrical section (5) forming the blade root for the securing in the assembly of application is formed; whereas the attachment of the sections (7, 8) of longitudinal composition of the blade is established with an anchoring by means of rods (15) which are included through opposite longitudinal holes (11) of the respective sections (7, 8), said rods (15) being attached in a threaded coupling at one end on elements (14) which are fitted in cavities (12) of one of the sections (7) which are attached, whereas at the other end these rods (15) emerge in cavities (13) of the other section (8) participating in the attachment, nuts (17) being incorporated in these cavities (13) on the end of the rods (15), which nuts allow performing a tightening for frontally compressing the sections (7, 8) against one another.

2. The wind turbine blade according to claim 1, **characterized in that** the extensions (4) making up the cylindrical section (5) forming the root are determined with beveled or stepped-cut lateral edges (6) for the attachment by means of the bonding of the mentioned extensions (4) at said lateral edges (6).

3. The wind turbine blade according to claim 1, **characterized in that** the cavities (12 and 13) into which the longitudinal holes (11) for housing the rods (15) open out are made perpendicularly over the inner portion of the structural wall of the sections (7, 8), without affecting the outer surface.

4. The wind turbine blade according to claims 1 and 3, **characterized in that** the structural wall of the sections (7, 8) determines in the attachment area a thickened portion (10), in which the longitudinal holes (11) and the corresponding cavities (12, 13) are defined.

5. The wind turbine blade according to claim 1, **characterized in that** in the coupling for the attachment between the sections (7, 8) of longitudinal composition of the blade there is included an intermediate ring (9) having, on its front faces, channels (9.1) in which the outer lateral skins (1) and the stringers (2) of the sections (7, 8) are fitted with their end edges.
